# EUROPÄISCHE PATENTSCHRIFT

(11) **EP 0 942 886 B1**
(45) Veröffentlichungstag und Bekanntmachung des Hinweises auf die Patenterteilung: **05.09.2001**
(21) Anmeldenummer: 97951853.7
(22) Anmeldetag: 04.12.1997
(51) Int. Cl.: B65G 47/84

(54) **SORTIERVORRICHTUNG FÜR STÜCKGUT UND VERFAHREN ZU DEREN BETRIEB**
ITEM SORTING DEVICE AND METHOD FOR THE OPERATION THEREOF
DISPOSITIF DE TRI POUR CHARGES ISOLEES ET SON PROCEDE DE MISE EN ACTION

(30) Priorität: 04.12.1996 US 759400
(43) Veröffentlichungstag der Anmeldung: 22.09.1999
(73) Patentinhaber: Atecs Mannesmann AG, 40213 Düsseldorf (DE)
(72) Erfinder: OWCZARZAK, Thomas, J., Grand Rapids, MI 49505 (US); BOZARTH, Charles, W., Holland, MI 49423 (US); VEIT, Frank, W., Spring Lake, MI 49456 (US)
(74) Vertreter: Meissner, Peter E., Dipl.-Ing.
(86) Internationale Anmeldenummer: DE9702900
(87) Internationale Veröffentlichungsnummer: WO9824717

(56) Entgegenhaltungen:
- EP-A- 0 484 151
- EP-A- 0 581 291
- US-A- 3 731 782

## Beschreibung

Die Erfindung betrifft einen Sortierförderer für Stückgut, insbesondere für Pakete, Päckchen und Behälter, gemäß dem Oberbegriff des Anspruches 1 und ein Verfahren zum Betrieb eines Sortierförderers gemäß dem Oberbegriff des Anspruches 15.

Derartige Sortierförderer, die entlang von Tragprofilen verschiebbare Abschiebeelemente aufweisen, die zum Abschieben von Stückgut von der Förderfläche des Förderers auf einen angrenzenden Abzweigförderer quer über die Förderfläche bewegbar sind, sind beispielsweise aus der EP 0484151 A1 bekannt. Diese Sortierförderer weisen eine aus einer Reihe von parallel und mit Abstand zueinander angeordneten Tragprofilen, wie z. B. Rohren oder Tragstangen gebildete Förderfläche auf, auf denen das zu fördernde Stückgut getragen wird. Mindestens einem der Tragprofile ist ein Abschiebeelement zugeordnet, das entlang der Tragprofile und somit in einer Richtung quer zur Förderrichtung des Sortierförderers verschiebbar ist. Für den Fall, daß das auf der Förderfläche transportierte Stückgut nicht abgeschoben werden soll, werden die Abschiebeelemente im Ruhezustand an einer Seite der Förderfläche geführt, ohne auf das Stückgut einzuwirken. Für den Fall, daß ein Stückgutteil abgeschoben werden soll, werden die Abschiebeelemente aus ihrer bisherigen geradlinigen Bewegungsbahn seitlich abgelenkt und bewegen sich schräg zur Förderrichtung entlang der Tragprofile, um so die seitlich neben den Abschiebeelementen geförderten Stückguttteile auf einen angrenzenden Abzweigförderer, einen Stauförderbereich oder einem anderem Teil der Förderfläche abzuschieben.

Die Aktivierung und Steuerung der Abschiebeelemente erfolgt über ein Netzwerk von Führungs- und Abzweigschienen, die über Weichen miteinander verbunden sind und unterhalb der Förderfläche angeordnet sind. Jeder dieser Abschiebeelemente weist ein Führungselement auf, das sich nach unten von dem Abschiebeelement erstreckt und vorzugsweise als Stift ausgebildet ist, an dem eine Führungsrolle gelagert ist, die in die angrenzend angeordneten Führungs- oder Abzweigschienen eingreift. In den Bereichen des Sortierförderes, in denen keine Stückguttteile abgeschoben werden sollen, verlaufen die Führungschienen parallel zur Förderrichtung des Sortierförderers und sind im Bereich unterhalb der Seiten der Förderfläche des Sortierförderers angeordnet. Diese seitlichen Führungsschienen verhindern, daß die Abschiebeelemente quer zur Förderrichtung des Sortierförderers abgelenkt werden. Hierdurch werden die Abschiebeelemente entlang einer der beiden Seiten der Förderfläche geführt. In den Bereichen des Sortierförderers, in denen die Stückgutteile abgeschoben werden sollen, ist unterhalb der Förderfläche eine Abzweigschiene angeordnet, die diagonal zur Förderrichtung des Sortierförderes ausgerichtet ist. Ein Weichen- oder Schaltelement verbindet die seitliche Führungsschiene mit der Abzweigschiene und hat die Aufgabe, die Führungselemente von einem oder mehreren Abschiebeelementen vorgewählt von der seitlichen Führungsschiene auf die Abschiebeschiene umzulenken. Wenn ein abzuschiebendes Stückgutteil den Abschiebebereich des Sortierförderers erreicht, wird das Weichenelement umgeschaltet und das Abschiebeelement von der Führungsbahn in Förderrichtung und entlang einer Seite des Förderers auf eine Führungsbahn umgeleitet, die diagonal zur Förderrichtung des Förderers verläuft. Hierdurch bewegen sich die Abschiebeelemente schräg zur Förderrichtung und quer über die Förderfläche und schieben die angrenzend neben den Abschiebeelementen geförderten Stückgutteile auf den angrenzenden Abzweigförderer oder in eine Staufördererzone. Weitere Einzelheiten bezüglich des Betriebes eines derartigen Sortierförderers sind in dem US-Patent 5,127,510 beschrieben, auf dessen Offenbarung hiermit Bezug genommen wird.

Nachteiligerweise tritt bei derartigen Sortierförderern ein Lärm- und Verschleißproblem auf, das durch das schlagartige Auftreffen der Führungselemente mit ihren Stiften und Führungsrollen an die Führungsfläche der seitlichen Führungschiene oder einer anderen Stoppfläche, nachdem die Abschiebeelemente quer über die Förderfläche geleitet worden sind. Die Bewegung des Sortierförderers bzw. dessen Tragprofile in Förderrichtung im Zusammenhang mit der Führung des Führungselementes in der diagonal verlaufenden Abzweigschiene ruft eine quer zur Förderrichtung verlaufende Kraftkomponente in den Abschiebeelementen hervor. Diese Kraftkomponente wirkt selbstverständlich nur solange auf die Führungselemente, wie diese in der Abschiebeschiene geführt werden. Nach Verlassen der Abzweigschiene wirken jedoch die gleichgerichteten Trägheitskräfte weiter auf die Führungselemente ein. Aufgrund dieser Trägheitskräfte werden die Führungselemente auch nach Verlassen der Abschiebeschiene weiter in deren diagonalen Ausrichtung bewegt, bis die Stifte und die Führungsrollen der Führungselemente mit der seitlichen Führungsfläche der seitlichen Führungsschiene auftreffen.

Da der Förderer Geschwindigkeiten bis 2,75 m/s (540 feet/minute) und darüber erreicht und typischerweise sieben Abschiebelemente je Meter Fördererlänge hintereinander angeordnet sind, ergibt sich, daß die Anzahl der Kollisionen der Führungselemente an die Führungsfläche der seitlichen Führungsschiene sehr groß ist. Neben dem Lärmproblem, das diese Kollisionen verursachen, wird hierdurch auch ein erhöhter Verschleiß der Seitenflächen der seitlichen Führungsschienen und der Stifte und Führungsrollen der Führungselemente hervorgerufen, so daß ein schnellerer Ersatz notwendig ist.

Eine mögliche Lösung, dieses Problem in den Griff zu bekommen, ist die Anordnung einer kurvenförmigen Aussparung in der Führungsfläche der seitlichen Führungsschiene in dem Bereich, in dem die Führungselemente von den Abzweigschienen kommend auftreffen. Hierdurch werden die Führungselemente der Abschiebeelemente nicht direkt abgestoppt sondern werden durch die kurvenförmige Aussparung sanfter in die gewünschte Richtung parallel zur Förderrichtung des Sortierförderers abgelenkt. Diese Lösung kann das Problem jedoch nicht zufriedenstellend beheben, da der auftretende Verschleiß und die auf die Führungselemente einwirkenden Zugkräfte nicht unterbunden sondern nur gemindert wird. Darüberhinaus wird durch die kurvenförmige Aussparung nachteiligerweise am Ende der Aussparung das Führungselement mit einer entgegen der diagonalverlaufenden Abschieberichtung gerichteten Trägheitskraft beaufschlagt und trifft daher bei Einleitung in die seitliche Führungsschiene an deren gegenüberliegenden Seitenwand auf. Desweiteren wird für die Anordnung der kurvenförmigen Aussparung zusätzlicher Einbauraum benötigt, der sich in Förderrichtung stromabwärts hinter dem Ende der Abzweigschiene an der seitlichen Führungsschiene erstreckt. Daher kann nicht unmittelbar anschließend an eine Abzweigschiene eine weitere Abzweigschiene angeordnet werden.

Eine weitere mögliche Lösung der vorgenannten Probleme ist möglich durch die Ausbildung der seitlichen Führungsschienen des Sortierförderes aus einem hochschlagzähem Kunststoffmaterial oder durch die Anordnung einer Kunststoffabdeckung auf die Innenseite der seitlichen Führungsschiene. Hierdurch kann zwar der Verschleiß an den Führungselementen der Abschiebeelemente und an den Führungsflächen der seitlichen Führungsschienen vermindert werden; das Lärmproblem wird jedoch nicht beseitigt, vielmehr wird nur eine Änderung der Tonlage des Lärms erreicht.

Ausgehend von diesem Stand der Technik liegt der vorliegenden Erfindung die Aufgabe zugrunde, einen Sortierförderer für Stückgut und ein Verfahren für dessen Betrieb zu schaffen, das in einer konstruktiv einfachen Weise den Verschleiß der Führungselemente und der seitlichen Führungsschienen vermindert und die Lärmemission im Bereich des Zusammenlaufens der Abschiebeschiene mit der Führungsschiene eindämmt und hierbei kein zusätzlicher Einbauraum entlang der Führungsschiene benötigt wird.

Diese Aufgabe wird gelöst durch einen Sortierförderer für Stückgut mit den Merkmalen des Patentanspruchs 1. Ein Verfahren zum Betrieb eines Sortierförderers ist in dem Patentanspruch 15 angegeben. Die kennzeichnenden Merkmale der Unteransprüche 2 bis 14 stellen vorteilhafte Ausgestaltungen der erfindungsgemäßen Vorrichtung.

Die vorliegende Erfindung zeichnet sich durch einen Sortierförderer und ein Verfahren für dessen Betrieb aus, die verhindern, daß die durch die Trägheitskräfte weiter diagonal zur Förderrichtung des Sortierförderers nach Verlassen der Abschiebeschiene bewegten Führungselemente auf die seitlichen Führungsflächen der seitlichen Führungsschienen auftreffend einwirken. Die vorgeschlagene Lösung führt vorteilhafterweise nicht dazu, daß zusätzlicher Einbauraum entlang der Führungsschiene benötigt wird, so daß ein weiteres Weichenelement und auch eine weitere Abschiebeschiene möglichst nah in Förderrichtung hinter einer anderen Abzweigschiene angeordnet werden kann.

Der erfindungsgemäße Sortierförderer zeichnet sich durch mindestens ein Anzugselement aus, das im Übergangsbereich einer Abschiebeschiene zu einer Führungsschiene eines Sortierförderers angeordnet ist. Der Sortierförderer weist hierbei eine sich in Förderrichtung erstreckende Förderfläche auf, der durch eine Vielzahl von untereinander verbundenen Förderflächenteilen gebildet ist, auf denen jeweils ein Abschiebeelement gelagert ist. Das Anzugselement für das Abschiebeelement ist an dem Sortierförderer in der Nähe des Abzweigsbereichs zwischen einer winklig zur Förderrichtung ausgerichteten ersten Führungsbahn und einer zweiten Führungsbahn, die parallel zur Förderrichtung des Sortierförderers und seitlich an eine Seite der Förderfläche des Sortierförderers angrenzend verläuft. Das Anzugselement für das Führungselement ist ausreichend nah an der ersten Führungsbahn angeordnet, um die auf die Führungselemente einwirkenden Trägheitskräfte der entlang der ersten Führungsbahn geführten Führungselemente zu eliminieren. Hierdurch werden die Führungselemente im wesentlichen vor Kollisionen mit der Seitenfläche der seitlichen Führungsbahn oder anderen Stoppflächen des Sortierförderers bewahrt. Ferner ist das Anzugselement für die Führungselemente weit genug von der zweiten Führungsbahn entfernt angeordnet, so daß die Führungselemente, die entlang der zweiten Führungsbahn geführt werden, nicht durch das Anzugselement aus ihrer Bahn abgelenkt werden. Vorzugsweise ist das Abzugselement als Magnetanordnung ausgebildet.

Das erfindungsgemäße Verfahren zum Betrieb eines Sortierförderes zeichnet sich dadurch aus, daß durch mindestens ein Anzugselement für die Abschiebeelemente, das an dem Ende einer Abschiebeschiene angeordnet ist, die unterhalb der Förderfläche verläuft und die Aufgabe hat, die Abschiebeelemente quer zur Förderrichtung über die Förderfläche zu führen, die Führungselemente auch im Endbereich der Abschiebeschiene entlang der durch den von der Abschiebeschiene in die seitliche Führungsschiene durchgehenden Führungsfläche geführt werden. Das Anzugselement für die Abschiebeelemente hat die Funktion, die auf die Abschiebeelemente einwirkenden Trägheitskräfte aufzuheben, so daß die Führungselemente nicht mit der Seitenfläche der parallel zur Förderrichtung verlaufenden seitlichen Führungsschiene, die dem Ende der Abschiebeschiene gegenüberliegt, kollidieren.

Nachfolgend wird die Erfindung anhand von zwei in Zeichnungen dargestellten Ausführungsbeispielen näher erläutert. Es zeigen:
- Figur 1: eine Draufsicht auf einen Sortierförderer,
- Figur 2: eine Schnittansicht von Figur 1 entlang der Schnittlinie II-II,
- Figur 3: einen vergrößerten Ausschnitt von Figur 1 aus dem mit III bezeichneten Abzweigbereich,
- Figur 4: eine perspektivische Ansicht des Grundelementes gemäß Figur 3, wobei die Magnetanordnung nicht dargestellt ist,
- Figur 5: eine Schnittansicht von Figur 3 entlang der Schnittlinie V-V,
- Figur 6: eine Explosionszeichnung einer Magnetanordnung und
- Figur 7: eine der Figur 3 entsprechende Draufsicht eines Sortierförderers in einer weiteren Ausführungsform.

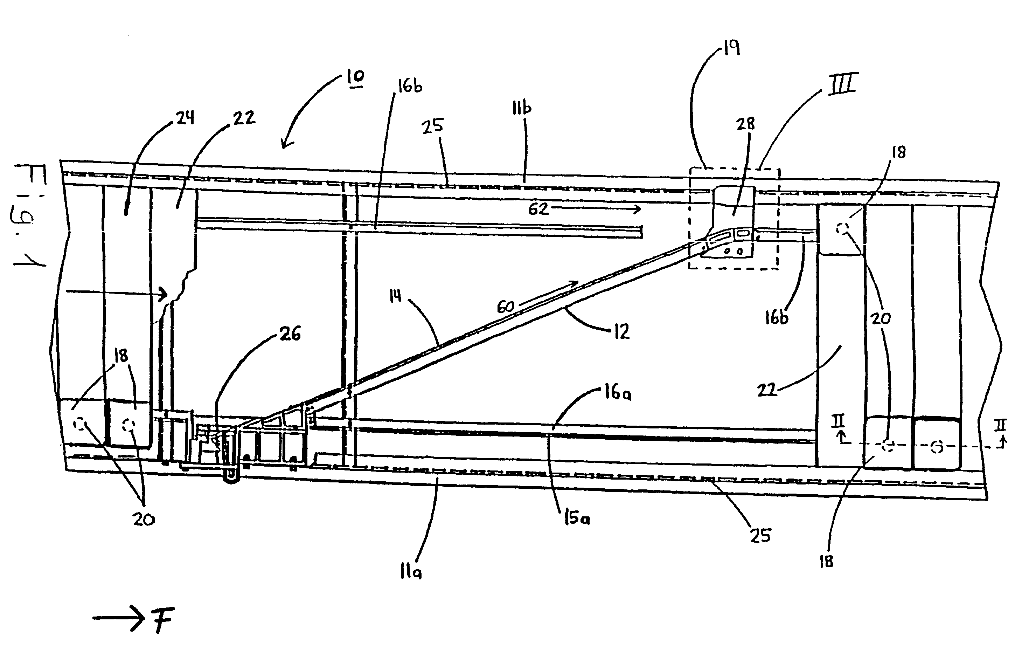

Die Figur 1 zeigt eine Draufsicht auf einen Förderer 10 für die Sortierung von Stückgut mit Abschiebeelementen 18 und einer Förderfläche 24, die im mittleren Bereich ausgespart dargestellt ist, um die unter der Förderfläche 24 angeordneten Bauelemente zu zeigen. Die Förderfläche 24 ist aus Förderflächenteilen wie z. B. stangenförmigen Tragprofilen 22 aufgebaut, die jeweils parallel und mit Abstand zueinander sowie quer zur Förderrichtung F ausgerichtet sind und eine endlose Förderfläche 24 bilden. Die Tragprofile 22 sind jeweils an den Enden über Zugmittel 25, vorzugsweise Ketten, miteinander verbunden, von dem die Tragprofile 22 in Förderrichtung F bewegt werden. Zumindest am Anfang des Förderers 10 sind entlang einer der beiden Längsseiten 11a und 11b der Förderflächen 24 Abschiebeelemente 18 angeordnet, die jeweils in der Art an einem Tragprofil 22 befestigt sind, die eine Bewegung des Abschiebeelementes 18 entlang des Tragprofils 22 und somit quer zur Förderrichtung F ermöglicht.

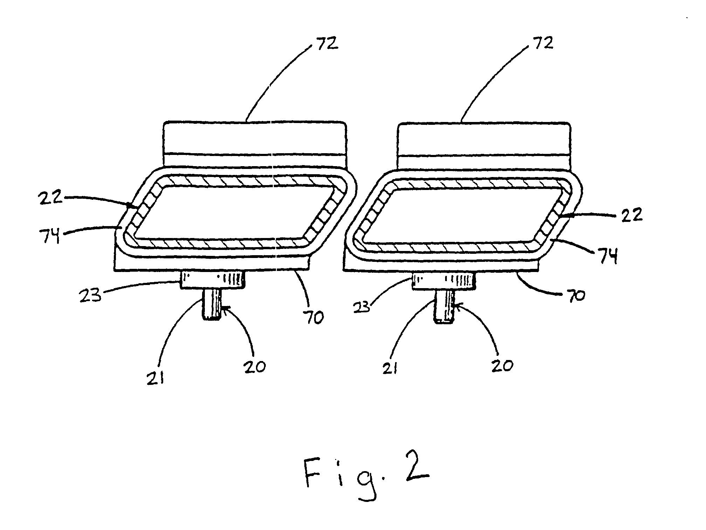

Die Figur 2 zeigt einen Schnitt entlang der Schnittlinie II-II in Figur 1 und somit zwei Tragprofile 22 mit jeweils einem seitlich aufgeschobenen Abschiebeelement 18. Die Abschiebeelemente 18 weisen ein oberes Abschiebeteil 22 auf, von dem die Stückgutteile seitlich von der Förderfläche 24 abgeschoben werden können, ein mittleres Gleitteil 74 auf, das im allgemeinen den Außenumfang des Längsprofils 22 umgreift, und ein unteres Fußteil 70 auf, an dem ein sich nach unten erstreckendes Führungselement 20 anschließt. Dieses Führungselement 20 ist aus einem sich nach unten erstreckenden Stift 21 und einer hieran konzentrisch gelagerten Führungsrolle 23, die vorzugsweise als Kugellager ausgebildet ist, aufgebaut. Die Abschiebeelemente 18 werden über ihre Führungselemente 20, die entlang der Längsseiten 11a, 11b der Förderfläche 24 und unterhalb der Förderfläche 24 verlaufende seitliche Führungsschienen 16a und 16b eingreifen, in Förderrichtung F geführt. Von den seitlichen Führungsschienen 16a und 16b werden jegliche seitliche Bewegung der Abschiebeelemente 18 unterbunden.

Wenn ein Stückgutteil von dem Förderer 10 auf einen angrenzenden und nicht dargestellten Abzweigförderer ausgeschleust werden soll, werden die Führungselemente 20 der Abschiebeelemente 18 aus der von den seitlichen Führungsschienen 16a und 16b gebildeten zweiten Führungsbahn 62 über ein Schalt- oder Weichenelement 26 in eine angrenzend angeordnete schräg zur Förderrichtung F verlaufende Abschiebeschiene 12 und zwar an dessen Führungsfläche 14 umgeleitet, die eine erste Führungsbahn 60 für die Führungselemente 20 bildet. Die Abschiebeelemente 18 werden durch eine Kombination aus der Vorwärtsbewegung des Förderers 10 mit den Tragstangen 22 in Förderrichtung F und der Führung der Führungsrolle 23 des Führungselementes 20 an der Führungsfläche 14 der Abzweigeschiene 12 quer zur Förderfläche 24 und schräg zur Förderrichtung F über die Führungsfläche 24 bewegt. Die entlang der Abschiebeschiene 12 geführten Führungselemente 20 erreichen am Ende der Abschiebeschiene 12 einen Abzweigbereich 19, in dem die Abschiebeelemente 18 wieder in die seitlichen Führungsschienen 16a, 16b geleitet werden. Die zuvor beschriebenen Schalt- oder Weichenelemente 26 werden nicht als Kern der Erfindung angesehen, so daß die Erfindung auch bei Förderer 10 anwendbar ist, die Schalt- oder Weichenelemente 26 in einer anderen Ausführung aufweisen.

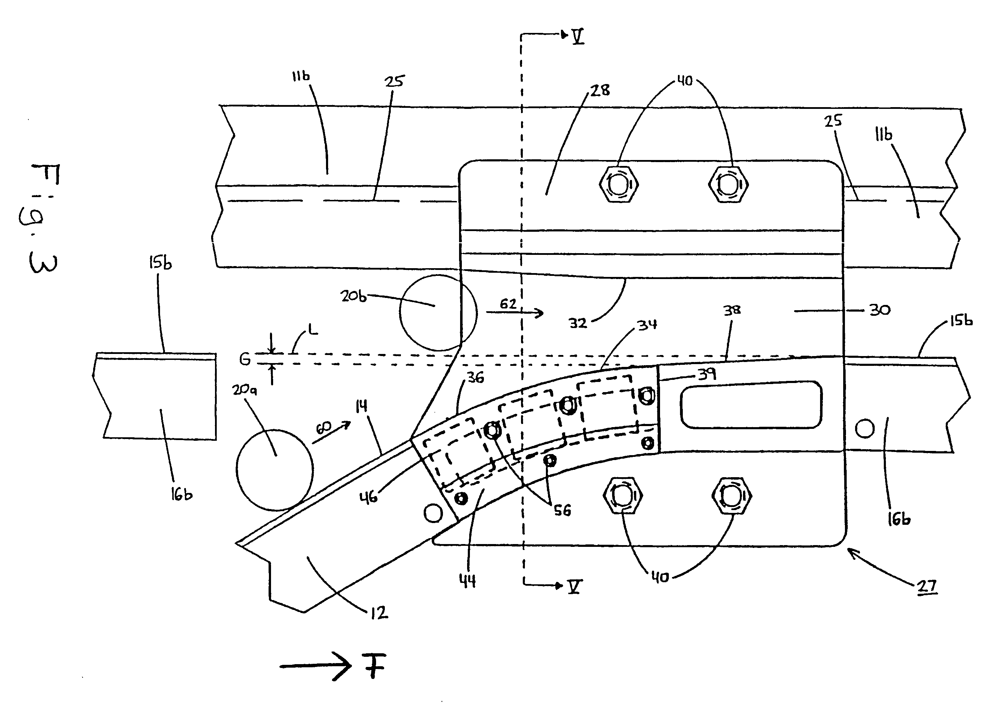

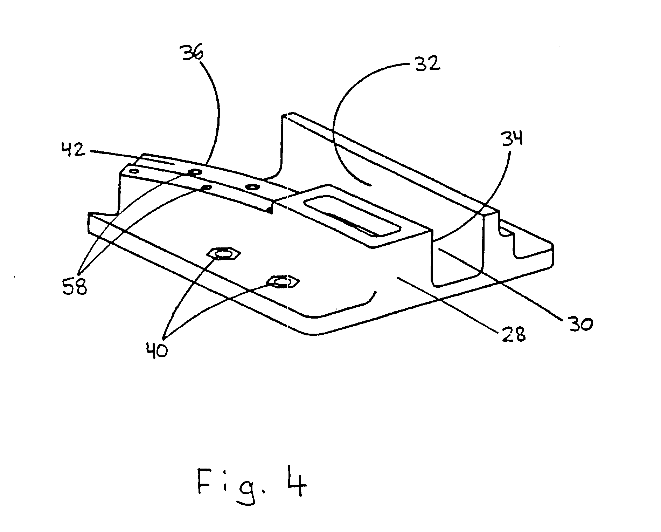

In dem Abzweigbereich 19 ist ein Element zur Lärm- und Verschleißreduzierung 27 angeordnet (siehe Figur 3), das im wesentlichen aus einem Grundelement 28 besteht, das eine Magnetanordnung 44 aufweist. Das Grundelement 28 ist an einem Ende mit der Abzweigschiene 12 und an dem anderen Ende mit der seitlichen Führungsschiene 16b verbunden. Das Grundelement 28 hat einen Führungskanal 30, der an der der Abschiebeschiene 12 gegenüberliegenden Seite von einer Außenfläche 30 und an der gegenüberliegenden Seite von einer Innenfläche 34 begrenzt ist (siehe Figuren 3 und 4). Die Innenfläche 34 weist desweiteren einen kreisförmig gekrümmten Kurventeil 36 auf, der in einen gerade verlaufenden Geradteil 38 an einer Verbindungsstelle 39 übergeht. Das Grundelement 28 ist an dem Förderer 10 über Verbindungsmittel 40 in Form von Schrauben in der Art befestigt, daß das in Förderrichtung F stromaufwärts gelegene Ende des Kurventeils 36 mit der Führungsfläche 14 des Endes der Abzweigschiene 12 fluchtet. Das Grundelement 28 ist auch in derart ausgerichtet, daß das stromabwärts gelegene Ende des Geradteils 38 in die Führungsfläche 15b der seitlichen Führungschiene 16b übergeht und mit ihr einen Winkel einschließt. In einer bevorzugten Ausführungsform ist das Grundelement 28 aus Urethan hergestellt. Mit einer Linie L ist die gedachte Verlängerung der Führungsseite 15b der seitlichen Führungsschiene 16b im Abzweigbereich 19 dargestellt. Zwischen der Linie L und der Innenfläche 34 des Führungskanals 30 an der Verbindungsstelle 39 bleibt eine Lücke G bestehen, deren Bedeutung später näher erläutert wird.

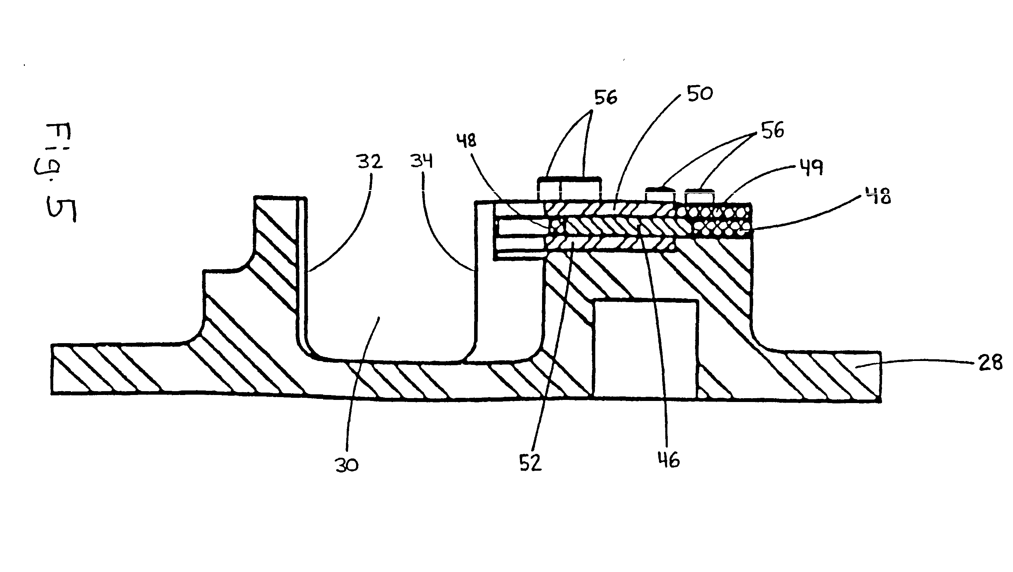

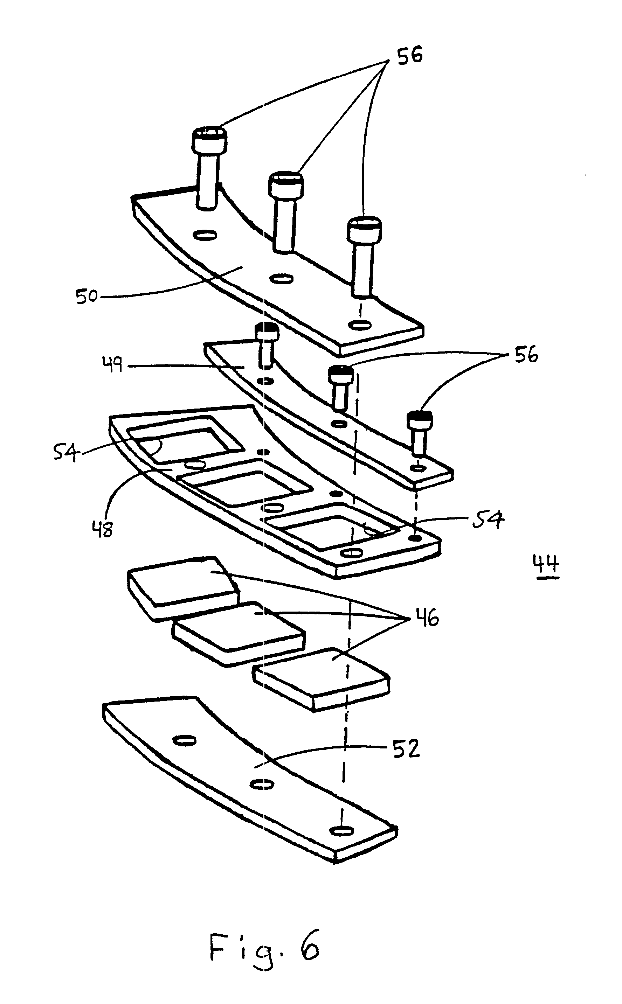

Angrenzend an den Kurventeil 36 des Grundelements 28 ist eine Ausnehmung 42 angeordnet, auf der eine Magnetanordnung 44 befestigt ist (siehe Figuren 5 und 6). Die Magnetanordnung 44 beeinhaltet eine untere Polplatte 52, ein Magnethalter 48 mit Öffnungen 54, in dem Magnete 46 eingesteckt sind und der oben auf der unteren Polplatte 52 angeordnet ist, ein Befestigungselement 49 für den Magnethalter 48 ist auf dem Magnethalter 48 angeordnet und einer oberen Polplatte 50. Die obere Polplatte 50 ist oberhalb der Magnete 46, des Magnethalters 48 und des Befestigungselementes 49 für den Magnethalter 48 angeordnet. Die Magnetanordnung 44 nimmt die Magnete 46 mit ihrem Magnethalter 48 auf, der zwischen den oberen und unteren Polplatten 50 und 52 angeordnet ist. Die einzelnen Schichten der Magnetanordnung 44 sind über unmagnetische Verbindungselemente 56 wie Schrauben oder Bolzen untereinander zusammengehalten und an dem Grundelement 28 befestigt. Die Verbindungselemente 56 sind hierbei in Bohrungen 58 in dem Grundelement 28 eingesteckt (siehe Figur 3). In einer bevorzugten Ausführungsform sind die oberen und unteren Polplatten 50 und 52 aus Stahl, der Magnethalter 48 und das Befestigungselement 49 für den Magnethalter 48 aus einem nicht magnetischen Material wie z. B. Aluminium hergestellt. Andere nichtmagnetische Materialien können auch ins Auge gefasst werden, wie z. B. Kunsstoffe. Die Verbindungselemente 56 sind ebenfalls aus einem magnetischen nicht anziehendem Material hergestellt, das in der bevorzugten Ausführungsform nichtrostender Stahl ist. Unmagnetisches Material ist bevorzugt, da es nicht wesentlich das magnetische Feld der Magnetanordnung 44 beeinflußt. Ebenfalls in der bevorzugten Ausführungsform sind die Magnete 46 aus Neodym, Eisen und Bor (Nd-Fe-B) hergestellt. Derartige Magnete 46 werden beispielsweise von dem Unternehmen Ugimag Inc., Indiana, USA unter der Artikelnummer F 0034-00121 vertrieben. Wenn mehr als ein Magnet 46 in der Magnetanordnung 44 angeordnet ist, sind die Magnete 46 vorzugsweise mit ihrem Nordpol alle in die gleiche Richtung ausgebildet.

Wenn der Förderer 10 in Betrieb ist, fahren die Führungselemente 20 in den Führungskanal 30 des Grundelements 28 des Elements zur Geräusch- und Verschleißminderung 27 aus zwei möglichen Führungsbahnen 60, 62 ein. Eine erste Führungsbahn 60 ist definiert an einer Seite durch die Führungsfläche 14 der Abschiebeschiene 12, an der in Figur 3 das Führungselement 20a anliegt. Das in Figur 3 dargestellte Führungselement 20a befindet sich im Endbereich der ersten Führungsbahn 60, in dem das Abschiebeelement 18 schräg über die Führungsfläche 24 geführt wird. Eine zweite Führungsbahn 62 verläuft entlang der Längsseite 11b der Förderfläche 24, in der das Führungselement 20b geführt wird. Die Führungselemente 20, die der zweiten Führungsbahn 62 folgen, sind möglicherweie zuvor über eine andere erste Führungsbahn 60 geführt worden und werden jetzt im wesentlichen parallel und angrenzend an die Längsseite 11b der Förderfläche 24 geführt. Die entlang der ersten Führungsbahn 60 geführten Führungselemente 20 treten in den Führungskanal 30 angrenzend an den Kurventeil 36 der Innenfläche 34 des Führungskanals 30 ein. Hierbei wird das Führungselement 20 von den Magneten 46 angezogen und der Kontakt zu dem Kurventeil 36 bleibt erhalten, wenn das Führungselement 20 entlang des Kurventeils 36 geführt wird. Durch die Führungsrolle 23 des Führungselementes 20, die im Kontakt mit dem Kurventeil 36 steht, wird die Bewegungsrichtung des Führunselementes 20 kontinuierlich von einer quer zur Förderrichtung F gerichteten Richtung zu einer in Förderrichtung F verlaufenden Richtung umgewandelt. Hierdurch wird vermieden, daß das Führungselement 20 mit der Außenfläche 32 des Führungselements des Führungskanals 30 oder einer anderen Stoppfläche kollidiert, wodurch das durch derartige Kollisionen hervorgerufene Lärm- und Verschleißproblem behoben wird.

Ein von der zweiten Führungsbahn 62 in den Führungskanal 30 eingelaufenes Führungselement 20 ist bereits möglicherweise weiter stromaufwärts entlang einer Abschiebeschiene 12 geführt worden, oder im Fall eines Förderers 10, von dem nach beiden Seiten abgeschoben werden kann, befindet sich in einer Position, um ein Stückgutteil auf die gegenüberliegende Seite des Förderes 10 abzuschieben. In jedem Fall ist es notwendig, daß dieses Führungselement 20 durch den Führungskanal 30 des Grundelements 20 hindurchgeführt wird, ohne von den Magneten 46 abgelenkt zu werden. Würden die Führungselemente 20 doch von den Magneten 46 angezogen werden, so würden diese mit der Innenfläche 34 des Führungskanals 30 kollidieren, wodurch einerseits Lärm entstehen und andererseits der Verschleiß der Führungsrolle 23 und des Grundelementes 28 ansteigen würde. Dieses Problem wird durch eine Anordnung einer seitlichen Lücke G zwischen der Linie L, definiert durch eine gedachte Verlängerung der Führungsfläche 15b der seitlichen Führungschiene 16b, und der Verbindungsstelle 39 zwischen dem Kurventeil 36 und dem Geradteil 38 gelöst. Da die Linie L auch die innere Führungsfläche 15b der zweiten Führungsbahn 62 beschreibt, stellt die Lücke G den kleinsten möglichen Abstand der Führungselemente 20, die entlang der zweiten Führungsbahn 62 geführt werden, zu den Magneten 46 dar.

Je kleiner die Lücke G je näher gelangen die Führungselemente 20 auf der zweiten Führungsbahn 62 zu den Magneten 46 und je stärker wirkt sich die magnetische Kraft auf diese Führungselemente 20 aus. Daraus folgt, daß wenn die Lücke G zu gering ist, daß die Abschiebeelemente 20 auf der zweiten Führungsbahn 62 eine ausreichende Anziehungskraft erfahren und ihre gewöhnliche lineare Bewegungsbahn zu verlassen, um möglicherweise mit der Innenfläche 34 des Führungskanals 30 zu kollidieren und hierdurch zusätzlichen Lärm und Verschleiß zu produzieren, der unerwünscht ist.

Auf der anderen Seite wird, wenn die Lücke G zu groß gewählt wird, eine größere Kraft quer zur Förderrichtung F auf die Führungselemente 20 während ihrer Bewegung entlang des Geradteils 38 der Innenfläche 34 aufgebracht. Diese Kraft ist bedingt durch die leicht winklige Ausrichtung des Geradteils 38 im Bezug auf die seitlichen Führungsschienen 11a und 11b. Da diese Querkraft stromaufwärts hinter den Magneten 46 auf die Abschiebeelemente 18 aufgebracht wird, kann diese nicht von den Magneten 46 vermindert werden und führt daher nachteiligerweise zu einem Anschlagen der Führungselemente 20 an die Führungsflächen 15a und 15b der seitlichen Führungsschiene 16a und 16b.

Die Größe der Lücke G ist bestimmt durch den Winkel zwischen dem Geradteil 38 und der inneren Führungsfläche 15b der seitlichen Führungsschiene 16b und kann verändert werden durch abweichende Abmessungen des Grundelementes 28. In der bevorzugten Ausführungsform weist der Abstand G eine Breite von etwa 0,005 m (0,2 inches) auf.

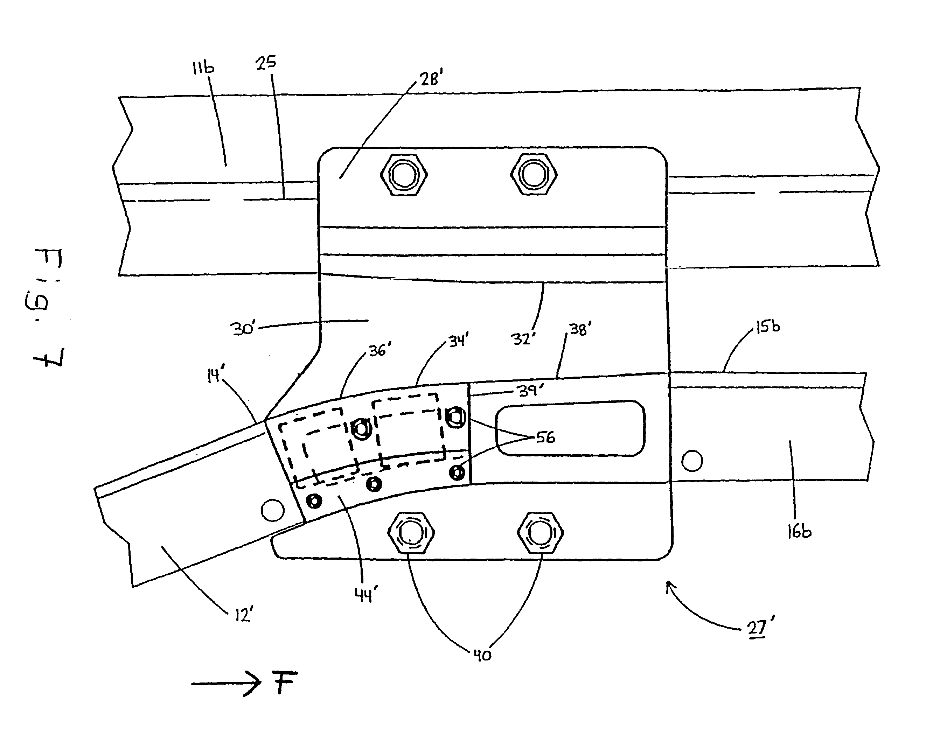

In der Figur 7 ist ein Element zur Reduzierung von Lärm und Verschleiß 27' in einer alternativen Ausführungsform dargestellt, das ein Grundelement 28' mit einem kürzeren Kurventeil 36' der Innenfläche 34' des Führungskanals 30' aufweist und dessen Magnetanordnung 44' im wesentlichen aus nur zwei Magneten 46 besteht. In dieser Ausführung wird eine geringere Anzahl von Magneten 46 benutzt, da der Winkel zwischen der Abschiebeschiene 12' und der Längsseite 11b des Förderers 10 geringer ist als in der vorherigen Ausführungsform. In der vorherigen Ausführungsform, die drei Magnete 46 aufwies, hat dieser Winkel einen Wert von 30°. In der vorliegenden Ausführungsform mit zwei Magneten 46 weist dieser Winkel einen Betrag von 20° auf. Aufgrund dieses kleineren Winkels reichen nur zwei Magnete 46 aus, um den Wechsel der Bewegungsrichtung der Abschiebeelemente 18 aus der Richtung der Abschiebeschiene 12 in Richtung der seitlichen Führungsschiene 16b zu erreichen, da bedingt durch den kleineren Winkel auch die Länge des Kurventeils 36' kürzer ist.

Obwohl die Erfindung zuvor in Bezug auf zwei Ausführungsformen beschrieben worden ist, soll dies nicht als Beschränkung der Erfindung auf nur diese Ausführungsformen verstanden werden. Zum Beispiel ist die Ausführung der Erfindung nicht beschränkt auf die Verwendung von nur zwei oder drei Magneten. Die Anzahl der Magnete ist allein abhängig von der vorliegenden Ausgestaltung des Förderes. Die Magnete können wahlweise als Elektromagnete oder Permanentmagnete ausgebildet sein. Auch ist die vorliegende Erfindung nicht beschränkt auf die Anordnung von Magneten entlang eines Kurventeils der Abschiebe- oder Führungsschienen. Die Magnete können auch entlang anderer Führungsflächen angeordnet werden.

Auch kann die vorliegende Erfindung in Bezug auf andere Fördererarten als in dieser Anwendung beschrieben verwendet werden. Die Erfindung kann in jeder Art von Förderern angewendet werden, die quer zur Förderrichtung bewegbare Teil aufweisen, die von Schienen oder ähnlichen Bauteilen geführt sind, die unterhalb der Förderfläche angeordnete sind. Auch können die Führungs- und Abschiebeschienen kurvenförmig anstatt der gezeigten linearen Ausführung ausgebildet sein.

Auch ist der Einsatz des Elementes zur Reduzierung von Lärm und Verschleiß nicht auf die in Figur 1 gezeigte Anordnung am Ende der Abschiebeschiene begrenzt. Eine Verwendung ist auch an Führungsschienen möglich, die entlang des Förderers angeordnet sind, um die Abschiebeelemente wieder auf die gegenüberliegende Seite für einen weiteren Abschiebevorgang zurückzuführen. Wenn die Förderfläche das Ende des Förderers erreicht, beginnt ihre Rückkehrbewegung entgegen der Förderrichtung zurück zu dem Anfang des Förderers, die gewöhnlicherweise unterhalb der Förderfläche stattfindet Um sicherzustellen, daß die zurückgeführte Förderfläche am Beginn des Förderers mit ihren Abschiebeelementen auf der für die Vorwärtsbewegung der Förderfläche gewünschten Seite ankommt, ist es notwendig, die Abschiebeelemente während des Rücklaufs der Förderfläche von der einen Längsseite des Förderers zu der anderen Längsseite des Förderers wechseln zu können. Dieser Wechsel ist in der gleichen Weise wie bei der Vorwärtsbewegung der Förderfläche verwirklicht, nämlich durch die Benutzung von Abschiebeschienen und möglicherweise aber nicht notwendig von Weichenelementen. Genauso wie während der Vorwärtsbewegung der Förderfläche tritt das Problem der Entstehung von Lärm und des erhöhten Verschleißes durch Anschlagen der Führungselemente der Abschiebeelemente an die Führungsflächen der seitlichen Führungsschienen auf und kann somit durch eine Verwendung der erfindungsgemäßen Elemente zur Reduzierung des Lärms und des Verschleißes verhindert werden.

### Bezugszeichenliste

- 10: Förderer
- 11a,b: Längsseite von 24
- 12: Abschiebeschiene
- 14: Führungsfläche von 12
- 15a,b: Führungsfläche von 16
- 16a,b: seitliche Führungschiene
- 18: Abschiebeelement
- 19: Abzweigbereich
- 20: Führungselement
- 21: Stift
- 22: Tragprofil
- 23: Führungsrolle
- 24: Förderfläche
- 25: Zugmittel
- 26: Weichenelement
- 27: Element zur Lärm- und Verschleißreduzierung
- 28: Grundelement
- 30: Führungskanal
- 32: Außenfläche von 30
- 34: Innenfläche von 30
- 36: Kurventeil von 34
- 38: Geradteil von 34
- 39: Verbindungsstelle
- 40: Verbindungsmittel
- 42: Ausnehmung
- 44: Magnetanordnung
- 46: Magnet
- 48: Magnethalter
- 49: Befestigungselement für 48
- 50: obere Polplatte
- 52: untere Polplatte
- 54: Öffnungen
- 56: Verbindungselement
- 58: Bohrungen
- 60: erste Führungsbahn
- 62: zweite Führungsbahn
- 70: unteres Fußteil von 18
- 72: oberes Abschiebeteil von 18
- 74: mittleres Gleitteil von 18
- F: Förderrichtung
- G: Lücke
- L: Linie

## Patentansprüche

1. Sortierförderer für Stückgut, insbesondere für Pakete, Päckchen und Behälter, bestehend aus einer in Förderrichtung (F) bewegbaren Förderfläche (24), die aus einer Vielzahl von untereinander beabstandet und miteinander verbundenen Förderflächenteilen besteht, aus einer Vielzahl von Abschiebeelementen (18), die mindestens entlang eines der Förderflächenteile für eine Querbewegung relativ zur Förderrichtung (F) verschiebbar geführt sind, aus einem Netzwerk von unterhalb der Förderfläche (24) angeordneten seitlichen Führungsschienen (16a, b) und Abschiebeschienen (12), an denen sich von den Abschiebeelementen (18) nach unten erstreckende Führungselemente (20) führbar sind, wobei die Abschiebeschienen (12) winklig zur Längsseite (11 a, b) der Förderfläche (24) zur Aufbringung einer quergerichteten Kraft auf die Abschiebeelemente (18) für eine Bewegung der Abschiebeelemente schräg über die Förderfläche (24) zu der anderen Längsseite (11a, b) der Förderfläche (24) ausgerichtet sind und die Abschiebeschienen (12) jeweils eine erste Führungsbahn (60) und die seitlichen Führungsschienen (16) jeweils eine zweite Führungsbahn (62) bilden, die im wesentlichen parallel zur Längsseite (11a, b) des Förderfläche (24) ausgerichtet ist, und aus einem Element zur Reduzierung von Lärm und Verschleiß (27), das im Abzweigbereich (19) zwischen der ersten Führungsbahn (60) und der zweiten Führungsbahn (62) angeordnet ist,
**dadurch gekennzeichnet**,
daß mindestens ein mindestens einen Magneten (46) aufweisendes Anzugselement für die Führungselemente (20) der Abschiebeelemente (18) im Abzweigbereich (19) derart angeordnet ist, daß die entlang der ersten Führungsbahn (60) geführten Führungselemente (20) von einer Anzugskraft am Ende der Abschiebeschiene (12) an die Führungsfläche (14) der Abschiebeschiene (12) angezogen werden, sowie die entlang der zweiten Führungsbahn (62) geführten Führungselemente (20) aus ihrer Führungsbahn (62) durch die Anzugskräfte des Anzugselementes nur unwesentlich abgelenkt werden.

2. Sortierförderer nach Anspruch 1,
**dadurch gekennzeichnet**,
daß der Magnet (46) als Permanentmagnet ausgebildet ist.

3. Sortierförderer nach Anspruch 1 oder 2,
**dadurch gekennzeichnet**,
daß das Anzugselement aus einer unteren Polplatte (52), einem Magnethalter (48) mit einer der Anzahl der Magnete (46) entsprechenden Anzahl von Öffnungen (54) besteht, der auf der unteren Polplatte (52) angeordnet ist und die Magnete (46) in den Öffnungen (54) angeordnet sind, und aus einer oberen Polplatte (50), die auf dem Magnethalter (48) angeordnet ist, wobei die obere Polplatte (50), der Magnethalter (48) und die untere Polplatte (52) untereinander und mit dem Förderer (10) im Abzweigbereich (19) befestigt sind.

4. Sortierförderer nach Anspruch 3,
**dadurch gekennzeichnet**,
daß der Magnethalter (48) aus nichtmagnetischem Material hergestellt ist.

5. Sortierförderer nach Anspruch 3 oder 4,
**dadurch gekennzeichnet**,
daß der Magnethalter (48), die untere Polplatte (52) und die obere Polplatte (50) mit dem Förderer (10) und untereinander durch Verbindungselemente (56) verbunden sind, die aus nichtmagnetischem Material hergestellt sind.

6. Sortierförderer nach Anspruch 4 oder 5,
**dadurch gekennzeichnet**,
daß das nichtmagnetische Material rostfreier Stahl ist.

7. Sortierförderer nach Anspruch 4 oder 5,
**dadurch gekennzeichnet**,
daß das nichtmagnetische Material Aluminium ist.

8. Sortierförderer nach einem der Ansprüche 2 bis 7,
**dadurch gekennzeichnet**,
daß der Magnet aus einer Verbindung von Neodyn, Eisen und Bor hergestellt ist.

9. Sortierförderer nach einem der Ansprüche 2 bis 8,
**dadurch gekennzeichnet**,
daß die Abschiebeschiene (12) im Bereich einer Längsseite (11a, b) des Förderers (10) endet und über ein Grundelement (28) mit einer die zweite Führungsbahn (62) bildenden seitlichen Führungsschiene (16a, b) verbunden ist, das Grundelement (28) einen Kurvenbereich im Verlauf der ersten Führungsbahn (60) bildet und an dem Grundelement (28) mindestens ein Magnet (46) in eine an den Kurvenbereich angrenzenden Position angeordnet ist, so daß zur Führung der Führungselemente (20) entlang des Kurvenbereichs von dem Magneten (46) eine magnetische Kraft auf die Führungselemente (20), die entlang der ersten Führungsbahn (60) geführt werden, einwirkt.

10. Sortierförderer nach Anspruch 9,
**dadurch gekennzeichnet**,
daß das Grundelement (28) einen Führungskanal (30) für die Führungselemente (20) aufweist, dessen an die Abschiebeschiene (12) anschließende Innenfläche (34) in Förderrichtung (F) gesehen einen Kurventeil (36) aufweist, der in einen Geradteil (38) übergeht.

11. Sortierförderer nach einem der Ansprüche 1 bis 10,
**dadurch gekennzeichnet**,
daß die Führungselemente (20) aus einem Stift (21) mit einem oberen und einem unteren Ende und aus einer Führungsrolle (23) bestehen, die an dem oberen Ende des Stiftes (21) gelagert ist, wobei die Führungsrolle (23) von dem Anzugselement entlang der ersten Führungsbahn (60) über die magnetische Anziehungskraft gehalten wird.

12. Sortierförderer nach einem der Ansprüche 1 bis 11,
**dadurch gekennzeichnet**,
daß die zweite Führungsbahn (62) durch parallel und unterhalb der Längsseiten (11a, b) des Förderers (10) verlaufende seitliche Führungsschienen (16a, b) gebildet wird.

13. Sortierförderer nach einem der Ansprüche 1 bis 12,
**dadurch gekennzeichnet**,
daß eine Lücke (G) zwischen der gedachten Verlängerung (Linie L) der inneren Führungsfläche (15b) der seitlichen Führungsschienen (16a, b) und der Verbindungsrolle (39) zwischen dem Kurventeil (36) und dem Gradteil (38) des Führungskanals (30) derart gewählt ist, daß die Führungselemente (20), die entlang der zweiten Führungsbahn (62) geführt werden, aus ihrer Bewegung in Förderrichtung (F) im wesentlichen nicht abgelenkt werden.

14. Verfahren zum Betrieb eines Sortierförderers, insbesondere nach einem der Ansprüche 1 bis 13, bestehend aus einer in Förderrichtung (F) bewegbaren Förderfläche (24), die aus einer Vielzahl von untereinander beabstandet und miteinander verbundenen Förderflächenteilen besteht, aus einer Vielzahl von Abschiebeelementen (18), die mindestens entlang eines der Förderflächenteile für eine Querbewegung relativ zur Förderrichtung (F) verschiebbar geführt sind, aus einem Netzwerk von unterhalb der Förderfläche (24) angeordneten seitlichen Führungsschienen (16a, b) und Abschiebeschienen (12), in denen sich von den Abschiebeelementen (18) nach unten erstreckende Führungselemente (20) führbar sind, wobei die Abschiebeschienen (12) winklig zur Längsseite (11a, b) der Förderfläche (24) zur Aufbringung einer quergerichteten Kraft auf die Abschiebeelemente (18) für eine Bewegung der Abschiebeelemente schräg über die Förderfläche (24) zu der anderen Längsseite (11a, b) der Förderfläche (24) ausgerichtet sind und die Abschiebeschienen (12) jeweils eine erste Führungsbahn (60) und die seitlichen Führungsschienen (16) jeweils eine zweite Führungsbahn (62) bilden, die im wesentlichen parallel zur Längsseite (11a, b) des Förderfläche (24) ausgerichtet ist, und aus einem Element zur Reduzierung von Lärm und Verschleiß (27), das im Abzweigbereich (19) zwischen der ersten Führungsbahn (60) und der zweiten Führungsbahn (62) angeordnet ist,
**dadurch gekennzeichnet**,
daß zumindest im Abzweigbereich (19) zwischen der ersten Führungsbahn (60) und der zweiten Führungsbahn (62) mittels eines mindestens einen Magneten (46) aufweisenden Anzugselementes eine in Richtung der Führungsfläche (14) der ersten Führungsbahn (60) gerichtete Anzugskraft auf die entlang der ersten Führungsbahn (60) geführten Führungselemente (20) aufgebracht wird.

## Claims

1. Item sorting conveyor, especially for packets, small packages and containers, comprising a conveyor surface (24) moveable in the direction of conveyance (F) which comprises a large number of interspaced and interconnected conveyor surface members, a large number of deflecting elements (18), which are guided displaceable at least along one of the conveyor surface members for a transverse movement relative to the direction of conveyance (F), a network of lateral guide tracks (16a, b) disposed below the conveyor surface (24) and deflection tracks (12) on which guiding elements (20) extending downwards from the deflecting elements (18) can be guided, the deflection tracks (12) being aligned at an angle to the longitudinal side (11a, b) of the conveyor surface (24) to apply a transversely directed force to the deflecting elements (18) for a movement of the deflecting elements at an angle over the conveyor surface (24) to the other longitudinal side (11a, b) of the conveyor surface (24), and the deflection tracks (12) form respectively a first guideway (60) and the lateral guide tracks (16) form respectively a second guideway (62), which is aligned substantially parallel to the longitudinal side (11a, b) of the conveyor surface (24), and comprising an element for reducing noise and wear and tear (27), which is disposed in the bifurcation area (19) between the first guideway (60) and the second guideway (62),
**characterised in that**
at least one attracting member, having at least one magnet (46), for the guiding elements (20) of the deflecting elements (18) is disposed in the bifurcation area (19) in such a way that the guiding elements (20) guided along the first guideway (60) are attracted by a force of attraction at the end of the deflection track (12) to the guiding surface (14) of the deflection track (12), and the guiding elements (20) guided along the second guideway (62) are only insignificantly deflected from their guideway (62) by the forces of attraction of the attracting member.

2. Sorting conveyor according to claim 1, **characterised in that** the magnet (46) is configured as a permanent magnet.

3. Sorting conveyor according to claim 1 or 2, **characterised in that** the attracting member comprises a lower pole flange (52), a magnet holder (48) having a number of apertures (54) corresponding to the number of magnets (46) and which is disposed on the lower pole flange (52) and the magnets (46) are disposed in the apertures (54), and an upper pole flange (50) which is disposed on the magnet holder (48), the upper pole flange (50), the magnet holder (48) and the lower pole flange (52) being secured to one another and to the conveyor (10) in the bifurcation area (19).

4. Sorting conveyor according to claim 3, **characterised in that** the magnet holder (48) is produced from non-magnetic material.

5. Sorting conveyor according to claim 3 or 4, **characterised in that** the magnet holder (48), the lower pole flange (52) and the upper pole flange (50) are connected to the conveyor (10) and to one another by connecting elements (56) which are produced from non-magnetic material.

6. Sorting conveyor according to claim 4 or 5, **characterised in that** the non-magnetic material is stainless steel.

7. Sorting conveyor according to claim 4 or 5, **characterised in that** the non-magnetic material is aluminium.

8. Sorting conveyor according to one of claims 2 to 7, **characterised in that** the magnet is produced from a compound of neodymium, iron and boron.

9. Sorting conveyor according to one of claims 2 to 8, **characterised in that** the deflection track (12) ends in the region of a longitudinal side (11a, b) of the conveyor (10) and is connected via a basic element (28) to a lateral guide track (16a, b) forming the second guideway (62), the basic element (28) forms a curved region in the course of the first guideway (60), and at the basic element (28) is disposed at least one magnet (46) in a position adjacent to the curved region, such that to guide the guiding elements (20) along the curved region a magnetic force acts from the magnet (46) on the guiding elements (20) which are guided along the first guideway (60).

10. Sorting conveyor according to claim 9, **characterised in that** the basic element (28) has a guide channel (30) for the guiding elements (20), the inner surface (34) of which, communicating with the deflection track (12), has, when viewed in the direction of conveyance (F), a curved portion (36) which merges into a straight portion (38).

11. Sorting conveyor according to one of claims 1 to 10, **characterised in that** the guiding elements (20) comprise a pin (21) with an upper and a lower end and a guide roller (23) which is mounted at the upper end of the pin (21), the guide roller (23) being held by the attracting member along the first guideway (60) by means of the magnetic force of attraction.

12. Sorting conveyor according to one of claims 1 to 11, **characterised in that** the second guideway (62) is formed by lateral guide tracks (16a, b) running parallel and below the longitudinal sides (11a, b) of the conveyor (10).

13. Sorting conveyor according to one of claims 1 to 12, **characterised in that** a gap (G) between the imaginary extension (line L) of the inner guiding surface (15b) of the lateral guide tracks (16a, b) and the connecting roller (39) between the curved portion (36) and the straight portion (38) of the guide channel (30) is selected in such a way that the guiding elements (20) which are guided along the second guideway (62) are substantially not deflected from their movement in the direction of conveyance (F).

14. Method for operating an item sorting conveyor, especially according to one of claims 1 to 13, comprising a conveyor surface (24) moveable in the direction of conveyance (F) which comprises a large number of interspaced and interconnected conveyor surface members, a large number of deflecting elements (18), which are guided displaceable at least along one of the conveyor surface members for a transverse movement relative to the direction of conveyance (F), a network of lateral guide tracks (16a, b) disposed below the conveyor surface (24) and deflection tracks (12) in which guiding elements (20) extending downwards from the deflecting elements (18) can be guided, the deflection tracks (12) being aligned at an angle to the longitudinal side (11a, b) of the conveyor surface (24) to apply a transversely directed force to the deflecting elements (18) for a movement of the deflecting elements at an angle over the conveyor surface (24) to the other longitudinal side (11a, b) of the conveyor surface (24), and the deflection tracks (12) form respectively a first guideway (60) and the lateral guide tracks (16) form respectively a second guideway (62), which is aligned substantially parallel to the longitudinal side (11a, b) of the conveyor surface (24), and comprising an element for reducing noise and wear and tear (27), which is disposed in the bifurcation area (19) between the first guideway (60) and the second guideway (62),
**characterised in that**
at least in the bifurcation area (19) between the first guideway (60) and the second guideway (62), a force of attraction directed towards the guiding surface (14) of the first guideway (60) is applied by means of an attracting member having at least one magnet (46) to the guiding elements (20) guided along the first guideway (60).

## Revendications

1. Transporteur de triage pour des marchandises de détail, en particulier pour des paquets, des petits paquets et des conteneurs, constitué d'une surface de transport (24) déplaçable dans la direction de transport (F), qui est constituée d'une pluralité de parties de surface de transport reliées ensemble et écartées les unes des autres, d'une pluralité d'éléments poussoirs (18), qui sont guidés de façon déplaçable au moins le long d'une des parties de surface de transport pour un déplacement transversal par rapport à la direction de transport (F), d'un réseau de rails poussoirs (12) et de rails de guidage (16a, b) latéraux agencés au-dessous de la surface de transport (24), sur lesquels peuvent être guidés des éléments de guidage (20) s'étendant vers le bas des éléments poussoirs (18), les rails poussoirs (12) étant orientés angulairement par rapport à la face longitudinale (11 a, b) de la surface de transport (24) pour l'application d'une force transversale sur les éléments poussoirs (18) pour un déplacement des éléments poussoirs de façon inclinée sur la surface de transport (24) par rapport à l'autre face longitudinale (11a, b) de la surface de transport (24), les rails poussoirs (12) formant, à chaque fois, une première voie de guidage (60), et les rails de guidage latéraux (16), à chaque fois, une seconde voie de guidage (62), qui est orientée de façon généralement parallèle à la face longitudinale (11a, b) de la surface de transport (24), et d'un élément pour réduire le bruit et l'usure (27), qui est agencé dans la zone de dérivation (19) entre la première voie de guidage (60) et la seconde voie de guidage (62),
**caractérisé en ce qu**'au moins un élément d'actionnement, présentant au moins un aimant (46), pour les éléments de guidage (20) des éléments poussoirs (18) est agencé dans la zone de dérivation (19), de sorte que les éléments de guidage (20), guidés le long de la première voie de guidage (60), sont tirés par une force d'entraînement à l'extrémité du rail poussoir (12) contre la surface de guidage (14) du rail poussoir (12), et les éléments de guidage (20), guidés le long de la seconde voie de guidage (62), n'étant déviés que de façon non importante de leur voie de guidage (62) par les forces d'entraînement de l'élément d'actionnement.

2. Transporteur de triage selon la revendication 1,
**caractérisé en ce que** l'aimant (46) est réalisé comme aimant permanent.

3. Transporteur de triage selon la revendication 1 ou 2,
**caractérisé en ce que** l'élément d'actionnement est constitué d'une plaque polaire inférieure (52), d'un support d'aimant (48) ayant un nombre d'ouvertures (54) correspondant au nombre des aimants (46), qui est agencé sur la plaque polaire inférieure (52), et les aimants (46) sont agencés dans les ouvertures (54), et d'une plaque polaire supérieure (50), qui est agencée sur le support d'aimant (48), la plaque polaire supérieure (50), le support d'aimant (48), et la plaque polaire inférieure (52) étant fixés ensemble et au transporteur (10) dans la zone de dérivation (19).

4. Transporteur de triage selon la revendication 3,
**caractérisé en ce que** le support d'aimant (48) est fabriqué en une matière non magnétique.

5. Transporteur de triage selon la revendication 3 ou 4,
**caractérisé en ce que** le support d'aimant (48), la plaque polaire inférieure (52), et la plaque polaire supérieure (50) sont reliés au transporteur (10) et ensemble par des éléments de liaison (56) qui sont fabriqués en une matière non magnétique.

6. Transporteur de triage selon la revendication 4 ou 5,
**caractérisé en ce que** la matière non magnétique est de l'acier inoxydable.

7. Transporteur de triage selon la revendication 4 ou 5,
**caractérisé en ce que** la matière non magnétique est de l'aluminium.

8. Transporteur de triage selon une des revendications 2 à 7,
**caractérisé en ce que** l'aimant est fabriqué à partir d'un composé de néo-dyne, fer et bore.

9. Transporteur de triage selon une des revendications 2 à 8,
**caractérisé en ce que** le rail poussoir (12) s'achève dans la zone d'une face longitudinale (11a, b) du transporteur (10) et est relié, par l'intermédiaire d'un élément de base (28), à un rail de guidage latéral (16a, b) formant la seconde voie de guidage (62), l'élément de base (28) forme une zone courbe dans le cours de la première voie de guidage (60) et, sur l'élément de base (28), il est agencé au moins un aimant (46) dans une position adjacente à la zone courbe, de sorte que, pour guider les éléments de guidage (20) le long de la zone courbe par l'aimant (46), une force magnétique agit sur les éléments de guidage (20) qui sont guidés le long de la première voie de guidage (60).

10. Transporteur de triage selon la revendication 9,
**caractérisé en ce que** l'élément de base (28) présente un canal de guidage (30) pour les éléments de guidage (20), dont la surface interne (34) se raccordant au rail poussoir (12) présente, dans la direction de transport (F), une partie courbe (36) qui se poursuit en une partie rectiligne (38).

11. Transporteur de triage selon une des revendications 1 à 10,
**caractérisé en ce que** les éléments de guidage (20) sont constitués d'une broche (21) ayant une extrémité supérieure et une extrémité inférieure et d'un galet de guidage (23), qui est monté à l'extrémité supérieure de la broche (21), le galet de guidage (23) étant maintenu par l'élément d'actionnement le long de la première voie de guidage (60) par l'intermédiaire de la force d'attraction magnétique.

12. Transporteur de triage selon une des revendications 1 à 11,
**caractérisé en ce que** la seconde voie de guidage (62) est formée par des rails de guidage latéraux (16a, b) s'étendant parallèlement et au-dessous des faces longitudinales (11a, b) du transporteur (10).

13. Transporteur de triage selon une des revendications 1 à 12,
**caractérisé en ce qu**'un vide (G) entre le prolongement imaginaire (ligne L) de la surface de guidage interne (15b) des rails de guidage latéraux (16a, b) et du galet de liaison (39) entre la partie courbe (36) et la partie rectiligne (38) du canal de guidage (30) est choisi de sorte que les éléments de guidage (20), qui sont guidés le long de la seconde voie de guidage (62), ne sont pas déviés généralement de leur déplacement dans la direction de transport (F).

14. Procédé pour mettre en action un transporteur de triage, en particulier selon une des revendications 1 à 13, constitué d'une surface de transport (24) déplaçable dans la direction de transport (F), qui est constituée d'une pluralité de parties de surface de transport reliées ensemble et écartées les unes des autres, d'une pluralité d'éléments poussoirs (18), qui sont guidés de façon déplaçable au moins le long d'une des parties de surface de transport pour un déplacement transversal par rapport à la direction de transport (F), d'un réseau de rails poussoirs (12) et de rails de guidage (16a, b) latéraux agencés au-dessous de la surface de transport (24), dans lesquels peuvent être guidés des éléments de guidage (20) s'étendant vers le bas des éléments poussoirs (18), les rails poussoirs (12) étant orientés angulairement par rapport à la face longitudinale (11a, b) de la surface de transport (24) pour l'application d'une force transversale sur les éléments poussoirs (18) pour un déplacement des éléments poussoirs de façon inclinée sur la surface de transport (24) par rapport à l'autre face longitudinale (11a, b) de la surface de transport (24), les rails poussoirs (12) formant, à chaque fois, une première voie de guidage (60), et les rails de guidage latéraux (16), à chaque fois, une seconde voie de guidage (62), qui est orientée de façon généralement parallèle à la face longitudinale (11a, b) de la surface de transport (24), et d'un élément pour réduire le bruit et l'usure (27), qui est agencé dans la zone de dérivation (19) entre la première voie de guidage (60) et la seconde voie de guidage (62),
**caractérisé en ce que**, au moins dans la zone de dérivation (19) entre la première voie de guidage (60) et la seconde voie de guidage (62), au moyen d'un élément d'actionnement présentant au moins un aimant (46), une force d'entraînement orientée en direction de la surface de guidage (14) de la première voie de guidage (60) est appliquée sur les éléments de guidage (20) guidés le long de la première voie de guidage (60).
